# EUROPÄISCHE PATENTSCHRIFT

(11) **EP 3 650 185 B1**
(45) Veröffentlichungstag und Bekanntmachung des Hinweises auf die Patenterteilung: **03.08.2022**
(21) Anmeldenummer: 19204660.5
(22) Anmeldetag: 22.10.2019
(51) Int. Cl.: B29B 7/80, B29B 7/48, B29B 7/60, B29B 7/72, B29C 48/00, B29C 48/02, B29C 48/27, B29C 48/30, B29C 48/40, B29C 48/405

(54) **VORRICHTUNG UND VERFAHREN ZUM MISCHEN UND AUSGEBEN HOCHVISKOSER REAKTIVER MEHRPHASENGEMISCHE**
DEVICE AND METHOD FOR MIXING AND DISPENSING HIGHLY VISCOUS REACTIVE MULTIPHASE MIXTURES
DISPOSITIF ET PROCÉDÉ DE MÉLANGE ET DE DISTRIBUTION DE MÉLANGES MULTIPHASES RÉACTIFS À HAUTE VISCOSITÉ

(30) Priorität: 09.11.2018 DE 102018128076
(43) Veröffentlichungstag der Anmeldung: 13.05.2020
(73) Patentinhaber: Universität Stuttgart, 70174 Stuttgart (DE)
(72) Erfinder: BAUMGÄRTNER, Felix, 70199 Stuttgart (DE)
(74) Vertreter: Qip Patentanwälte Dr. Kuehn & Partner mbB

(56) Entgegenhaltungen:
- WO-A1-2018/059930
- US-A- 3 584 102
- US-A- 3 584 341
- US-A1- 2014 011 945
- US-A1- 2017 182 701

## Beschreibung

### GEBIET DER ERFINDUNG

Die vorliegende Erfindung betrifft eine Vorrichtung sowie ein Verfahren zum Mischen und Ausgeben hochviskoser, reaktiver Mehrphasengemische.

### HINTERGRUND DER ERFINDUNG

Zur Herstellung von Mehrphasengemischen, wie beispielsweise zur Herstellung von Polyurethan- oder Epoxidharz-Werkstoffen, kann es erforderlich sein, zwei oder mehr verschiedene Stoffe als Ausgangskomponenten miteinander zu vermischen, damit diese chemisch miteinander reagieren und/oder vernetzen können. Dabei kann zumindest einer der Stoffe hochviskos sein, d.h. eine Viskosität von deutlich mehr als 1 Pa·s, oft mehr als 5 Pa·s, aufweisen.

Generell sind zum Vermischen verschiedener Stoffe unterschiedliche Verfahren bekannt. Dabei wird im Allgemeinen angestrebt, Ausgangskomponenten, die zunächst getrennt voneinander, d.h. beispielsweise in zwei Behältern, vorliegen können, möglichst homogen und/oder in möglichst kurzer Zeit und/oder in hoher Mischqualität vermischen zu können.

Beispielsweise können mithilfe von Hochdruck-Mischverfahren Stoffgemische erzeugt werden, indem zwei Strahlen aus Ausgangskomponenten mit hoher Geschwindigkeit aufeinander gerichtet werden und sich beim Zusammenprallen vermischen. Hochdruck-Mischverfahren sind derzeit für viele Einsatzzwecke die dominierenden großserientauglichen Mischverfahren, unter anderem deswegen, weil die hierfür einsetzbaren Mischvorrichtungen selbstreinigend ausgeführt werden können.

Allerdings können mit Hochdruck-Mischverfahren im Allgemeinen keine hochviskosen Stoffe verarbeitet werden, wie sie z.B. als Ausgangskomponenten bei einer Erzeugung von Polyurethan (PU) zum Einsatz kommen. Ferner unterliegen diese Verfahren Beschränkungen bei einem Dosierverhältnis und/oder bei maximal realisierbaren Viskositätsverhältnissen der zu mischenden Stoffe. Außerdem kann insbesondere bei einem Einsatz von festen Zusatzstoffen wie z.B. Verstärkungsstoffen oder Flammschutzmitteln, die vorab in eine der beiden Ausgangskomponenten eingemischt werden müssen, ein sehr hoher Verschleiß bei Vorrichtungen, die zum Mischen der Ausgangskomponenten eingesetzt werden, auftreten.

Alternativ können Niederdruck-Mischverfahren eingesetzt werden, um beispielsweise vernetzende Formmassen miteinander zu mischen. Bei Niederdruck-Mischverfahren wird ein Reaktionsgemisch in der Regel mittels statischer oder dynamischer Mischer homogenisiert. Beispielsweise kann als statischer Mischer ein sogenannter Kenics-Mischer eingesetzt werden. Dynamische Mischer können in unterschiedlichen Geometrien zum Einsatz kommen. Häufig werden die Geometrien dabei an Geometrien statischer Mischer angelehnt und hierbei eingesetzten Mischelemente zusätzlich in Rotation versetzt. Durch zusätzliches Aufbringen von Scherströmungen kann so eine bessere Homogenisierung beim Mischen der Ausgangskomponenten erzielt werden. Dabei werden bei Niederdruck-Mischverfahren oft Einweg-Mischelemente aus Kunststoff eingesetzt, welche insbesondere wegen mit der Zeit auftretenden Verschmutzungen meist regelmäßig gewechselt bzw. ersetzt werden müssen.

Mit konventionellen Niederdruck-Mischverfahren können zwar oft beliebige Mischverhältnisse und/oder hohe Viskositätsunterschiede bei den zu mischenden Ausgangskomponenten realisiert werden. Allerdings verfügen hierfür eingesetzte Niederdruck-Mischvorrichtungen bisher in der Regel nicht über eine selbstreinigende Geometrie. Hierdurch ist es meist notwendig, Teile einer Mischvorrichtung regelmäßig auszutauschen und/oder mit meist umweltschädlichen Lösemitteln zu reinigen bzw. auszukochen. Außerdem eignen sich konventionelle Niederdruck-Mischvorrichtungen aufgrund ihrer meist vergleichsweise geringen Dehndeformationen wenig zum intensiv dispersiven Mischen.

Als weitere Alternative werden insbesondere bei der Aufbereitung von thermoplastischen Kunststoffen beispielsweise zur Herstellung von Polymermischungen (teilweise auch als Polymerblends bezeichnet) z.B. zum Einarbeiten von Füll- und/oder Verstärkungsstoffen oder zur Additivierung Doppelschneckenextruder eingesetzt. Solche Doppelschneckenextruder können eine hervorragende Mischwirkung aufweisen, da aufgrund von Geometrien der darin eingesetzten Mischkomponenten sehr wirksam Scher- und Dehnströmungen erzeugt werden können. Diese können zu einer effizienten Verteilung beispielsweise von Feststoffen und/oder Fluidtropfen oder zum Aufbrechen von Feststoffagglomeraten führen. Außerdem kann eine Grundgeometrie von Doppelschneckenextrudern selbstreinigend sein, da Oberflächen von darin eingesetzten Mischkomponenten beim Betrieb des Doppelschneckenextruders übereinander streichen können, wodurch ein Anhaften und allmähliches "Festbacken" von Verschmutzungen oder Materialresten verhindert werden kann.

Allerdings wurde beobachtet, dass beim Einsatz von Doppelschneckenextrudern betriebspunktabhängig relativ große Mengen an Gasen wie beispielsweise Luft in ein dabei erzeugtes Mehrphasengemisch in Form eines Extrudats eingetragen werden können. Dies kann zu Beeinträchtigungen bei Produktqualität führen. Ferner können insbesondere bei einem diskontinuierlichen Betrieb eines Doppelschneckenextruders Probleme beispielsweise bei der Produktqualität auftreten, da sich in diesem Fall ein Betriebspunkt, d.h. zum Beispiel ein gegenwärtiger Fördervolumenstrom, ein Füllgrad und/oder ein Düsenvordruck, häufig ändern und zu nicht konstanter bzw. inhomogener Produktqualität führen kann.

WO 2018/059930 A1 beschreibt ein Hydroxyl-funktionalisiertes Polybutadien-Polyurethan-Hotmelt-Prepolymer und eine Extrusionsvorrichtung zur Verarbeitung desselben. US 2014/0011945 A1 beschreibt ein Verfahren zum Herstellen eines Klebemittels unter Verwendung eines Planetenextruders. US 3,584,102 und US 3,584,341 beschreiben ein Verfahren und eine Vorrichtung zum Erzeugen einer netzartigen Struktur. US 2017/0182701 A1 beschreibt einen Extruder für einen 3D-Additiv-Drucker.

### ZUSAMMENFASSUNG DER ERFINDUNG UND VORTEILHAFTER AUSFÜHRUNGSFORMEN

Es wurde somit erkannt, dass ein Bedarf an einer Vorrichtung sowie einem Verfahren besteht, mithilfe derer Mehrphasengemische erzeugt und dabei zumindest manche der Nachteile bzw. Defizite der oben beschriebenen, herkömmlich hierzu eingesetzten Ansätze ausgeräumt werden können. Insbesondere besteht ein Bedarf an einer Vorrichtung bzw. einem Verfahren , mittels derer Mehrphasengemische mit hoher Produktqualität erzeugt werden können und/oder ein Aufwand zum Herstellen, Warten und/oder Reinigen der hierzu eingesetzten Mischvorrichtung relativ gering gehalten werden kann.

Einem solchen Bedarf wird mit dem Gegenstand eines der unabhängigen

Ansprüche entsprochen. Vorteilhafte Ausführungsformen sind in den abhängigen Ansprüchen sowie in der nachfolgenden Beschreibung dargelegt. Gemäß einem ersten Aspekt der Erfindung wird eine Extrusionsvorrichtung gemäß Anspruch 1 beschrieben..

Gemäß einem zweiten Aspekt der Erfindung wird ein Verfahren zum Mischen und Ausgeben hochviskoser, reaktiver Mehrphasengemische gemäß Anspruch 9 beschrieben, wobei zumindest ein erster hochviskoser Stoff mit einem zweiten Stoff unter Verwendung einer Extrusionsvorrichtung gemäß einer Ausführungsform des ersten Aspekts der Erfindung gemischt werden.

Wie einleitend bereits angedeutet, bringen sowohl herkömmliche Hochdruck-Mischverfahren als auch herkömmliche Niederdruck-Mischverfahren meist Nachteile mit sich, die sie zum Erzeugen von Mehrphasengemischen ungeeignet erscheinen lassen oder zumindest eine Produktqualität des erzeugten Mehrphasengemischs negativ beeinflussen können. Vor allem lassen sich Hochdruck-Mischverfahren im Allgemeinen nicht zum Mischen hochviskoser Ausgangskomponenten einsetzen und Niederdruck-Mischverfahren sind bisher im Allgemeinen nicht mit selbstreinigenden Mischvorrichtungen durchzuführen und erfordern somit einen häufigen Bauteilaustausch und/oder wiederholte Reinigungsvorgänge.

Ein Ansatz, um diese Nachteile zu überwinden, wird darin gesehen, zum Mischen und Ausgeben hochviskoser reaktiver Mehrphasengemische Mehrwellenextruder einzusetzen, wie sie teilweise in ähnlicher Ausgestaltung schon für andere Anwendungszwecke benutzt werden.

Solche Mehrwellenextruder verfügen über wenigstens zwei Schneckenwellen, die gemeinsam in einem Gehäuse aufgenommen sind und während des Betriebs relativ zueinander rotieren und dabei ineinander eingreifen.

Aufgrund der Ausbildung der Wellen als Schneckenwellen werden dabei die zu mischenden Ausgangskomponenten bzw. das aus ihnen erzeugte Gemisch in einer Förderrichtung entlang einer Längsrichtung der Schneckenwellen gefördert.

Gleichzeitig werden die Ausgangskomponenten aufgrund des Ineinandereingreifens der Schneckenwellen intensiv durchmischt und dabei Dehn- und/oder Schervorgängen unterzogen.

Dabei kann dadurch, dass die zumindest zwei Schneckenwellen derart ausgebildet sein können und miteinander zusammenwirken können, dass sie während ihres Rotierens dichtkämmend ineinander eingreifen, erreicht werden, dass der Mehrwellenextruder im Wesentlichen während seines Betriebs selbstreinigend ist. Anders ausgedrückt können die beiden Schneckenwellen derart aneinander entlang wälzen bzw. reiben, dass ihre jeweiligen Oberflächen immer wieder von etwaigen Rückständen oder Verschmutzungen durch die zu mischenden Ausgangskomponenten befreit werden bzw. sich diese gar nicht erst anlagern können.

Allerdings wurde beim Betrieb von Mehrwellenextrudern beobachtet, dass sich deren Betriebspunkt insbesondere hinsichtlich eines aktuellen Fördervolumenstroms, Füllgrads und/oder Vordrucks mit der Zeit ändern kann. Insbesondere treten solche Änderungen bei einem diskontinuierlichen Betrieb des Mehrwellenextruders vermehrt auf. Änderungen beim Betriebspunkt können zu Variationen bei der Produktqualität des von dem Mehrwellenextruder erzeugten Mehrphasengemischs führen.

Daher wurde erkannt, dass zusätzlich zu dem Mehrwellenextruder eine Art Stellglied vorgesehen sein sollte, mithilfe dessen der aktuelle Betriebspunkt des Mehrwellenextruders in einer gewünschten Weise beeinflusst werden kann.

Um dies zu erreichen, wird erfindungsgemäss vorgeschlagen, die hierin beschriebene Extrusionsvorrichtung ergänzend zu dem Mehrwellenextruder mit einer speziellen Düse auszustatten, mit der ein Ausstoß von Extrudat-Mehrphasengemisch aus dem Mehrwellenextruder beeinflusst werden kann.

Diese Düse ist einerseits regulierbar, d.h. mit der Düse wird ein

Druckverbrauch vor einem Austrittsquerschnitt zeitabhängig eingestellt. Hierzu verfügt die Düse über ein Stellelement, dass sich innerhalb eines Kanals in der Düse in verschiedene Positionen verlagern lässt und dabei einen Durchflusswiderstand in dem Kanal nach Bedarf vergrößert oder verkleinert.

Andererseits soll die Düse selbstreinigend funktionieren. D.h., die Düse soll derart ausgestaltet sein, dass der Kanal der Düse während des Betriebs der Extrusionsvorrichtung mithilfe des Stellelements der Düse, d.h. ohne Zuhilfenahme anderer Komponenten, Werkzeuge oder gar Reinigungsmittel, gereinigt werden kann. Insbesondere soll die Düse mithilfe des Stellelements gereinigt werden können, ohne dass die Düse demontiert werden muss. Eventuell kann an der Düse ein ergänzendes Reinigungselement wie beispielsweise eine Druckluftdüse vorgesehen sein, mithilfe dessen z.B. an dem Stellelement anhaftende Verschmutzungen entfernt werden können. Die Düse ist somit ebenso wie der Mehrwellenextruder selbstreinigend ausgestaltet, sodass die gesamte Extrusionsvorrichtung selbstreinigend ist.

Insgesamt kann somit sowohl eine Wartung der Extrusionsvorrichtung massiv vereinfacht als auch eine Produktqualität des zu extrudierenden Mehrphasengemischs positiv beeinflusst werden.

Nachfolgend werden mögliche Details und Vorteile der hierin vorgestellten Vorrichtung bzw. des hierin vorgestellten Verfahrens und von deren Ausführungsformen erläutert.

Generell verfügt die hierin vorgeschlagene Extrusionsvorrichtung über einen Mehrwellenextruder und eine Düse, die mit dem Mehrwellenextruder zusammenwirkt und dessen Ausgabe von Extrudat regulieren kann.

Der Mehrwellenextruder verfügt über ein Gehäuse mit einem Einlass und einem Auslass. In dem Gehäuse sind mehrere Schneckenwellen aufgenommen. Ferner verfügt der Mehrwellenextruder über einen Antrieb, um die Schneckenwellen in Rotation zu versetzen.

Das Gehäuse kann aus einem mechanisch belastbaren Material wie zum Beispiel Metall bestehen, sodass die in dem Mehrwellenextruder während des Betriebs auftretenden Drücke aufgenommen werden können. An dem Einlass können die zu mischenden Ausgangskomponenten eingefüllt werden. Gegebenenfalls können mehrere Einlässe für verschiedene Ausgangskomponenten vorgesehen sein. Das Gehäuse verfügt über ein Innenvolumen bzw. ein Hohlraumvolumen, entlang dessen die eingefüllten Ausgangskomponenten hin zu dem Auslass gefördert werden können.

In diesem Innenvolumen sind die Schneckenwellen aufgenommen. Ein Querschnitt dieses Innenvolumens ist dabei vorzugsweise näherungsweise komplementär zu einem maximalen Querschnitt der darin aufgenommenen Schneckenwellen, sodass zumindest Teile des Außenumfangs der Schneckenwellen in mechanischem Kontakt mit Innenoberflächen des Gehäuses in diesem Innenvolumen stehen.

Die Schneckenwellen können ähnlich wie das Gehäuse aus einem mechanisch belastbaren Material wie zum Beispiel Metall bestehen. Eine Geometrie der Schneckenwellen kann derart angepasst sein, dass sie einerseits relativ zueinander rotierend dichtkämmend ineinandergreifen können und dass sie andererseits komplementär in dem Innenvolumen des Gehäuses aufgenommen werden können.

Eine Schneckenwelle kann dabei eine spiralartige oder schraubengewindeartige Ausgestaltung aufweisen, d.h. an ihrer Umfangsfläche einen spiralartig verlaufenden halboffenen Kanal ausbilden. Dieser Kanal kann mit einem ähnlich ausgestalteten halboffenen Kanal einer benachbarten Schneckenwelle dichtkämmend ineinandergreifend zusammenwirken. Treibende Flanken einer Schneckenwelle können dabei mit nicht-treibenden Flanken einer benachbarten Schneckenwelle zusammenwirken.

Durch das Rotieren der Schneckenwellen kann dabei in den spiralartigen Kanälen Extrudat entlang einer Längsrichtung der Schneckenwellen gefördert werden. Ein Förderfluss kann dabei sowohl von der Geometrie der Schneckenwellen als auch von einer Rotationsgeschwindigkeit, mit der diese rotiert werden, abhängen. Ferner kann ein Druck, mit dem das Extrudat in der Extrusionsvorrichtung gefördert wird und letztendlich aus dieser ausgegeben wird von einer axialen Länge der Schneckenwellen und insbesondere der axialen Länge eines mit Extrudat vollgefüllten Abschnitts der Schneckenwellen abhängen.

Um eine Mischwirkung in dem Mehrwellenextruder zu steigern, können in den Schneckenwellen ein oder mehrere Knetblöcke vorgesehen sein. Im Bereich eines solchen Knetblocks können die Wellen des Extruders lokal nicht mit einer Schneckengeometrie ausgestaltet sein, sondern mit einer anderen ineinandergreifenden Geometrie, sodass die Ausgangskomponenten bzw. das Extrudat im Bereich dieses Blocks besonders stark durchmischt und dabei gedehnt und/oder geschert wird. Typischerweise entfaltet der Mehrwellenextruder im Bereich eines Knetblocks keine Förderwirkung oder lediglich eine im Vergleich zu benachbarten schneckenartigen Bereichen untergeordnete Förderwirkung.

Der Antrieb des Mehrwellenextruders ist dazu ausgelegt, die Schneckenwellen rotierend anzutreiben. Dabei kann der Antrieb zumindest eine der Schneckenwellen direkt aktiv antreiben. Vorzugsweise treibt der Antrieb alle Schneckenwellen des Mehrwellenextruders aktiv an. Der Antrieb kann beispielsweise über einen starken Elektromotor verfügen. Dieser kann die Schneckenwelle(n) direkt oder über ein Getriebe antreiben.

Die Düse der Extrusionsvorrichtung weist ebenfalls ein Gehäuse mit einem Eingang und einem Ausgang auf. Das Gehäuse der Düse kann mit einem mechanisch belastbaren Material wie beispielsweise Metall ausgebildet sein. Der Eingang der Düse ist an den Auslass des Mehrwellenextruders angeschlossen, sodass aus dem Mehrwellenextruder ausströmendes Extrudat durch den Eingang in das Gehäuse der Düse bzw. einen darin vorgesehenen Kanal einströmt

Anders ausgedrückt ist die Düse stromabwärts des Extruders angeordnet, sodass ein Mehrphasengemisch-Extrudat, welches in dem Extruder durch Vermischen von hochviskosen, reaktiven Stoffen gebildet wurde, nach einem Austreten aus dem Extruder in der Düse weitergeleitet und letztendlich an deren Ausgang ausgegeben wird. . Der Kanal erstreckt sich bis zu dem Ausgang der Düse.

Der Kanal braucht dabei nicht umlenkungsfrei sein, sondern kann vorzugsweise eine Biegung, eine Krümmung und/oder eine Umlenkung, beispielsweise in einer L-Form, aufweisen. Am Ausgang der Düse kann durch den Kanal durchgeleitetes Extrudat ausströmen.

Die Düse verfügt über ein Stellelement, welches in verschiedene Positionen verlagert werden kann. Durch ein solches Verlagern des Stellelements wird in dem Kanal ein Durchflusswidcrstand bzw. ein Durchflussquerschnitt reguliert . Hierdurch kann durch gezieltes Verlagern des Stellelements auch ein von der Düse bewirkter Rückstau oder Druckverbrauch bzw. ein Druckverlauf in dem in Strömungsrichtung davor liegenden Mehrwellenextruder in einer gewünschten Weise beeinflusst werden.

Erfindungsgemäss sind das Stellelement und der Kanal derart strukturell aneinander angepasst und das Stellelement derart relativ zu dem Kanal verlagerbar, dass das Stellelement zwischen einer Geschlossenposition, in der das Stellelement den Kanal vollständig schließt, und einer Offenposition, in der das Stellelement den Kanal maximal freigibt, verlagerbar ist.

Mit anderen Worten sind das Stellelement und der das Stellelement aufnehmende Kanal der Düse derart ausgestaltet, dass das Stellelement innerhalb des Kanals relativ zu diesem verlagert werden kann. Dabei kann das Stellelement einerseits hin zu der Geschlossenposition verlagert werden und dabei den Kanal vollständig verschließen, sodass kein Extrudat mehr aus der Düse ausströmen kann. In dieser Geschlossenposition wird eine Ausgabe des Mehrphasengemischs aus der Extrusionsvorrichtung somit temporär blockiert. Andererseits kann das Stellelement hinzu der Offenposition verlagert werden und dabei den Kanal maximal freigeben, sodass Extrudat aus der Düse ausströmen kann. In dieser Offenposition kann somit das Mehrphasengemisch mit lediglich geringem Druckverlust aus der Extrusionsvorrichtung ausgegeben werden.

Durch die Möglichkeit, mithilfe der Düse eine Ausgabe von Mehrphasengemisch aus der Extrusionsvorrichtung freigeben oder temporär blockieren zu können, kann die vorgeschlagene Extrusionsvorrichtung vorteilhaft sowohl kontinuierlich als auch diskontinuierlich betrieben werden.

Hierbei weisen der Kanal und das Stellelement zumindest bereichsweise einen im Wesentlichen komplementären Querschnitt auf.

Anders ausgedrückt sind ein Querschnitt des Kanals und ein Querschnitt des darin aufgenommenen Stellelements zumindest in einem Teilbereich beider Komponenten im Wesentlichen gleich, sodass das Stellelement den

Querschnitt des Kanals im Wesentlichen vollständig ausfüllen und damit ein Durchströmen von Extrudat blockieren kann. Durch das im Wesentlichen vollständige Ausfüllen des Querschnitts des Kanals durch das Stellelement wird der Kanal bei der Schließbewegung durch das Stellelement ausgestrichen und ist somit selbstreinigend.

Unter "im Wesentlichen" kann in diesem Zusammenhang verstanden werden, dass die Querschnitte des Kanals einerseits und des Stellelements andererseits einander derart genau entsprechen, dass es in der Geschlossenposition der Düse durch das den Kanal verschließende Stellelement zu einem in der Praxis ausreichenden Abdichten der Extrusionsvorrichtung kommt, das heißt keine signifikante Menge an Extrudat mehr ausströmen kann. Beispielsweise können sich die Querschnittsflächen des Kanals und des Stellelements um weniger als 5 %, vorzugsweise weniger als 1 % oder insbesondere bei großen Querschnittsflächen weniger als 0,5 % oder gar weniger als 0,1 %, voneinander unterscheiden, wobei die Querschnittsfläche des Stellelements im Allgemeinen geringfügig kleiner als die Querschnittsfläche des Kanals ist.

Zusätzlich zu der Eigenschaft, regelbar zu sein und somit einen Durchfluss durch die Düse und hierdurch indirekt einen Rückstau und Druckaufbau in dem Mehrwellenextruder einstellen zu können, ist die Düse außerdem selbstreinigungsfähig .

Strukturell kann dies auf unterschiedliche Art und Weise implementiert sein. Auf jeden Fall soll die Düse vorteilhafterweise derart konfiguriert sein, dass zumindest ein für den zuverlässigen Betrieb der Extrusionsvorrichtung wichtiger Bereich des Kanals in der Düse während des Betriebs der Extrusionsvorrichtung mithilfe des Stellelements gereinigt werden kann bzw. zwangsläufig gereinigt wird.

Hierzu ist wie bereits beschrieben, der Querschnitt des Stellelements zumindest bereichsweise komplementär zu dem Querschnitt des Kanals ausgebildet. Aufgrund dieser geometrisch komplementären Ausgestaltung steht ein Außenumfang des Stellelements in Kontakt mit einer den Kanal umgebenden Innenwandung. Wenn das Stellelement entlang des Kanals verlagert wird, kann aufgrund dieses mechanischen Kontakts bewirkt werden, dass das Stellelement etwaige Ablagerungen an der Innenwandung mitnimmt bzw. aus dem Ausgang der Düse herauspresst. Auf diese Weise kann mithilfe des Stellelements der Kanal von solchen Ablagerungen oder Rückständen befreit und somit selbsttätig gereinigt werden.

Gemäß einer konkreten Ausführungsform kann der Kanal zumindest in einem das Stellelement aufnehmenden Teilbereich einen konstanten Querschnitt aufweisen und zumindest ein Teilbereich des Stellelements kann ebenfalls einen konstanten Querschnitt aufweisen sein. Der Kanal und der Teilbereich des Stellelements können in diesem Fall im Wesentlichen gleiche Querschnitte aufweisen.

Anders ausgedrückt kann der Kanal einen entlang des genannten Teilbereichs gleichbleibenden Querschnitt aufweisen, insbesondere einen kreisförmigen oder eckigen, beispielsweise rechteckigen, Querschnitt. Das Stellelement kann zumindest in einem Teilbereich einen hierzu komplementären Querschnitt aufweisen. Indem das Stellelement entlang des Kanals bewegt wird, kann somit zumindest dieser Teilbereich des Stellelements entlang seines gesamten Außenumfangs die Innenwandung des Kanals kontaktieren und diese von etwaigen Ablagerungen oder Verschmutzungen befreien. Eine solche beispielsweise zylindrische Ausgestaltung des Kanals und des Teilbereich des Stellelements kann sehr einfach realisiert werden. Beispielsweise kann der Kanal in ein Düsensubstrat gebohrt werden und/oder das Stellelement kann durch einen Drehprozess gefertigt werden.

Gemäß einer Ausführungsform kann die Extrusionsvorrichtung in einem Bereich, welcher sich von dem Auslass in dem Gehäuse des Mehrwellenextruders bis zum Ausgang in dem Gehäuse der Düse reicht, einen Sensor aufweisen, welcher dazu konfiguriert ist, einen Parameter, welcher den Durchflusswiderstand, der sich zwischen dem Eingang und dem Ausgang der Düse einstellt, charakterisiert, zu messen.

Anders ausgedrückt kann es für die Extrusionsvorrichtung vorteilhaft sein, über einen Sensor zu verfügen, der Sensordaten erzeugt, aufgrund derer der von der Düse bewirkte Durchflusswiderstand ermittelt bzw. Rückschlüsse über diesen erhalten werden können. Der Sensor kann beispielsweise ein Drucksensor sein, der den Druck beispielsweise in einem angrenzenden Bereich, durch den Extrudat durch die Düse strömt oder Extrudat aus dem Auslass des Mehrwellenextruders ausströmt, messen kann. Alternativ kann der Sensor beispielsweise ein Flusssensor sein, mit dem die Menge von Extrudat, die pro Zeiteinheit durch einen solchen Bereich strömt, gemessen werden kann. Aus dem gemessenen Druck und/oder dem gemessenen Fluss kann auf den von der Düse bewirkten Durchflusswiderstand rückgeschlossen werden. Dementsprechend kann mithilfe der von dem Sensor gelieferten Signale bzw. Daten eine Regelung des durch die Düse bewirkten Durchflusswiderstands ermöglicht werden. Abhängig von den Sensorsignalen kann dann beispielsweise das Stellelement geeignet in den Kanal der Düse mehr oder weniger weit hinein verlagert werden, um einen gewünschten Durchflusswiderstand zu erzeugen, der wiederum den Mischvorgang in dem Mehrwellenextruder in einer gewünschten Weise beeinflusst.

Prinzipiell sollte ein solcher Sensor an dem oder stromabwärts des Auslasses aus dem Mehrwellenextruder angeordnet sein, d.h. zwischen (einschließlich) dem Auslass des Mehrwellenextruders und dem Ausgang der Düse.

Gemäß einer weiter konkretisierten Ausführungsform kann der Sensor in einem Teilbereich angeordnet sein, der stromaufwärts eines Teilbereichs des Kanals, in den das Stellelement zu verlagern ist, angeordnet ist.

Eine solche Anordnung kann insbesondere dann vorteilhaft oder gar notwendig sein, wenn der Sensor als Drucksensor ausgebildet ist. Dementsprechend kann der Druck, wie er durch den in der Düse erzeugten Durchflusswiderstand in dem vorgeschalteten Mehrwellenextruder erzeugt wird, mithilfe des Sensors ermittelt werden und als mögliche Regelgröße für das Regeln der Düse eingesetzt werden.

Alternativ können jedoch auch andere Parameter, die mit dem Durchflusswiderstand korrelieren, mithilfe des Sensors gemessen werden und als Regelgröße eingesetzt werden. Ein hierfür eingesetzter Sensor kann eventuell auch an oder stromabwärts des Teilbereichs des Kanal, innerhalb dessen das Stellelement verlagert werden kann, angeordnet sein.

Gemäß einer Ausführungsform kann an der Düse ergänzend ein separates Reinigungselement vorgesehen sein, welches dazu konfiguriert ist, an dem Stellelement anhaftende Verschmutzungen zu entfernen.

Das ergänzende Reinigungselement kann beispielsweise eine Druckluftdüse, ein Bürste oder ähnliches sein. Mit dem Reinigungselement können insbesondere Verschmutzungen bzw. Extrudatreste, die beispielsweise mit dem Stellelement aus dem Kanal herausgedrückt wurden, von dem Stellelement entfernt werden.

Gemäß einer Ausführungsform können das Stellelement und der Kanal derart strukturell aneinander angepasst sein und das Stellelement derart relativ zu dem Kanal verlagerbar sein, dass durch Verlagern des Stellelements der Durchflusswiderstand stufenlos variierbar ist.

Anders ausgedrückt kann die regelbare Düse dazu angepasst sein, nicht nur in eine vollständig geschlossene oder eine vollständig geöffnete Konfiguration gebracht werden zu können, d.h. nur zwei Schließzustände zu haben, sondern auch zwischen diesen extremen Konfigurationen in jede beliebige Zwischenkonfiguration gebracht werden zu können. Die Düse kann dann durch geeignetes Positionieren des Stellelements relativ zu dem Kanal einen Durchfluss durch den Kanal bzw. einen Druckverbrauch in der Düse stufenlos regulieren und damit auch einen Rückstau in dem davor liegenden Mehrwellenextruder und einen in dem Mehrwellenextruder vorherrschenden Druck stufenlos regulieren.

Hierzu kann beispielsweise das Stellelement an einem Ende angefast und/oder konisch ausgebildet sein, sodass das Stellelement mit diesem Ende einen Querschnitt des Kanals zumindest teilweise ausfüllen kann. Je nachdem, wo das Stellelement in dem Kanal positioniert wird, wird ein größerer oder kleinerer Anteil des Kanals durch das sich z.B. verjüngende Ende des Stellelements eingenommen und somit ein Durchflussquerschnitt durch den Kanal reduziert. Ergänzend oder alternativ kann sich der Kanal linear oder spiralförmig entlang des Stellelements verjüngen. Mit sich änderndem Durchflussquerschnitt stellt sich auch ein anderer Durchflusswiderstand zwischen dem Eingang und dem Ausgang der Düse ein.

Als weitere Alternative können in dem Stellelement und/oder in einer Wandung des Kanals eine oder mehrere Nuten vorgesehen sein. Die Nut kann hierbei einen sich verändernden Querschnitt aufweisen, sodass sich je nachdem, an welcher Position das Stellelement in dem Kanal angeordnet ist, ein variabler Durchflussquerschnitt einstellt.

Die Nut kann aber alternativ auch einen konstanten Querschnitt aufweisen. Dabei wird der Durchflussquerschnitt nicht durch die Positionierung des Stellelements in dem Kanal beeinflusst. Aber eine Länge eines Anteils der Nut, durch den ein Extrudatfluss hindurch strömen muss, variiert je nachdem, an welcher Position das Stellelement in dem Kanal positioniert ist. Da mit zunehmender Länge der zu durchströmenden Nut ein Strömungswiderstand zunimmt, kann durch die Wahl der Positionierung des Stellelements in dem Kanal der Durchflusswiderstand zwischen dem Eingang und dem Ausgang der Düse variiert werden. Da der Strömungswiderstand im Wesentlichen linear mit der Länge der zu durchströmenden Nut skaliert, kann der Durchflusswiderstand bei dieser Ausgestaltung besonders genau eingestellt werden, insbesondere genauer als bei einer Ausgestaltung, bei der der Durchflussquerschnitt variiert, da der Durchflusswiderstand im Allgemeinen etwa von der vierten Potenz des Durchflussquerschnitts abhängt.

Gemäß einer Ausführungsform kann der Mehrwellenextruder ein Doppelschneckenextruder sein.

Ein solcher Doppelwellenextruder umfasst zwei Schneckenwellen, die ineinandergreifend typischerweise in einem Zylinder mit einer achtförmigen Bohrung liegen. Dieser Zylinder kann zur flexiblen Umrüstung ebenso wie die Schnecke aus einzelnen Modulen aufgebaut sein. Die Schnecken werden meist einseitig gelagert und werden oft über Keilwellenverbindungen oder Passfederverbindung mit einer Getriebestufe verbunden. Angetrieben werden sie in der Regel über ein Extrudergetriebe durch Elektromotoren. Ein Gehäuse des Extruders kann über Kühlelemente wie zum Beispiel Wasserkreisläufe gekühlt werden. Auf diese Weise kann ein Überhitzen des zu extrudierenden Materials vermieden werden. Die Heizung und Kühlung dient im Allgemeinen der Temperierung des Prozesses.

Ein Doppelschneckenextruder kann typischerweise verschiedene Verfahrenszonen aufweisen. In einer Einzugszone bzw. an einem Einlass werden Ausgangskomponenten eingezogen und gefördert. Anschließend können die Ausgangskomponenten in einer oder mehreren Kompressionszonen durch eine kleiner werdende Steigung verdichtet werden, wodurch der Füllgrad im Schneckengang zunimmt und nach Erreichen der Vollfüllung der Druck ansteigt. Durch speziell in die Schnecke integrierte Mischelemente kann optional in einer oder mehreren Mischzonen eine Mischleistung erhöht werden.

Ein Doppelschneckenextruder kann als einfachste Ausgestaltung eines Mehrwellenextruders angesehen werden. Ein alternativer Mehrwellenextruder kann beispielsweise ein Planetwalzenextruder sein.

Gemäß einer konkretisierten Ausführungsform kann der Mehrwellenextruder ein Gleichdralldoppelschneckenextruder sein.

Ein solcher Gleichdralldoppelschneckenextruder weist zwei Schneckenwellen auf, die um zueinander parallele Achsen rotiert werden. Im Gegensatz hierzu werden bei einem Gegendralldoppelschneckenextruder die Schneckenwellen um antiparallele Achsen rotiert. Gleichdralldoppelschneckenextruder ermöglichen eine gleichmäßigere Förderung des Extrudats, wohingegen bei Gegendralldoppelschneckenextrudern zum Teil eine pulsierende Förderung auftritt.

Gemäß einer Ausführungsform kann der Mehrwellenextruder dazu konfiguriert sein, die Schneckenwellen mit Drehzahlen von mehr als 2000 Umdrehungen pro Minute, beispielsweise zwischen 3000 und 30000 Umdrehungen pro Minute, vorzugsweise zwischen 5000 und 20000 Umdrehungen pro Minute, zu rotieren.

Aufgrund seiner regelbaren Düse und der dadurch möglichen drehzahlunabhängigen Rückstaulänge, mit der der Betriebspunkt des Mehrwellenextruders eingestellt werden kann, kann es möglich sein, den Mehrwellenextruder der hierin beschriebenen Extrusionsvorrichtung mit wesentlich höheren Drehzahlen zu betreiben, als dies beispielsweise bei konventionellen Doppelschneckenmischern, die typischerweise mit Drehzahlen von deutlich weniger als 2000 Umdrehungen pro Minute betrieben werden, der Fall ist.

Die höheren Drehzahlen ermöglichen ein effizientes Durchmischen und Extrudieren des Extrudats. Hierdurch kann unter anderem erreicht werden, dass das Extrudat bereits innerhalb einer kürzeren Strecke innerhalb der Extrusionsvorrichtung ausreichend vermischt wird, sodass die gesamte Extrusionsvorrichtung kürzer ausgestaltet werden kann, als dies bei herkömmlichen Extrusionsvorrichtungen typischerweise der Fall ist. Hierdurch kann in vorteilhafter Weise ein für die Extrusionsvorrichtung notwendiger Bauraum verringert werden. Andererseits ermöglicht ein Verkürzen der Extrusionsvorrichtung und damit der darin vorgesehenen Schneckenwellen, dass diese meist lediglich einseitig gelagerten Schneckenwellen schneller rotiert werden können.

Ausführungsformen der hierin beschriebenen Extrusionsvorrichtung können im Rahmen von Ausführungsformen eines Verfahrens gemäß des zweiten Aspekts der Erfindung zum Mischen und Ausgeben hochviskoser, reaktiver Mehrphasengemische verwendet werden. Dabei kann ein hochviskoser erster Stoff mit einem zweiten Stoff gemischt werden.

Gemäß einer Ausführungsform kann dabei der erste Stoff eine Viskosität von mehr als 1 Pa·s, vorzugweise mehr als 5 Pa·s, mehr als 10 Pa·s oder sogar mehr als 30 Pa·s, aufweisen. Solche verhältnismäßig zähflüssigen Stoffe können mit herkömmlichen Hochdruck-Mischverfahren nicht vermischt werden. Mit der hierin beschriebenen Extrusionsvorrichtung jedoch können auch solche hochviskosen Stoffe effizient vermischt werden. Dabei wirkt weiterhin vorteilhaft, dass die beschriebene Extrusionsvorrichtung selbstreinigend ausgestaltet sein kann, sodass keine zähflüssigen Ablagerungen oder Ähnliches in aufwendigen Reinigungsschritten entfernt werden müssen. Des Weiteren kann eine homogenere Produktqualität erzielt werden.

Gemäß einer Ausführungsform kann der erste Stoff ein Polyol sein. Der zweite Stoff kann ein Isocyanat sein. Mit einem Mehrphasengemisch aus diesen beiden Stoffen kann beispielsweise Polyurethan erzeugt werden. Mit herkömmlichen Mischvorrichtungen bzw. Mischverfahren lassen sich diese Stoffe bisher nicht oder allenfalls aufwendig mischen. Mit der hierin beschriebenen Extrusionsvorrichtung hingegen können diese Stoffe effizient gemischt und dabei ein homogenes und somit qualitativ hochwertiges Polyurethan erzeugt werden.

Gemäß einer Ausführungsform können bei der Durchführung des Verfahrens zusätzlich zu dem ersten und dem zweiten Stoff Festkörperpartikel mit der Extrusionsvorrichtung eingemischt werden.

Festkörperpartikel können mikroskopisch kleine Teilchen aus festem Material sein, welche typischerweise Abmessungen im Mikrometerbereich oder darunter aufweisen. Solche Festkörperpartikel können als weitere Bestandteile zusätzlich zu dem ersten und dem zweiten Stoff, die hochviskos und somit flüssig sind, zugefügt werden, um in der Extrusionsvorrichtung in ein zu erzeugendes Extrudat eingemischt zu werden. Ein mit solchen Festkörperpartikeln versetzt des Extrudat hat sich für manche Anwendungszwecke als besonders vorteilhaft erwiesen. Herkömmlich konnten solche mit Festkörperpartikeln versetzte Extrudate allenfalls mit sehr hohem technischem Aufwand erzeugt werden. Mit der hierin beschriebenen Extrusionsvorrichtung lassen sich solche Extrudate verhältnismäßig einfach und somit kostengünstig erzeugen.

Gemäß einer Ausführungsform kann die Extrusionsvorrichtung durch wiederholtes Öffnen und Schließen der Düse diskontinuierlich betrieben werden. Anders ausgedrückt kann die Düse der hierin vorgeschlagenen Extrusionsvorrichtung repetierend, beispielsweise periodisch, geöffnet und geschlossen werden, sodass ein diskontinuierlich pulsierender Extrudatfluss generiert wird. Ein solcher diskontinuierlicher Extrudatfluss kann bei verschiedenen Fertigungsverfahren zum Einsatz kommen, beispielsweise innerhalb eines Spritzgussverfahrens.

Alternativ hierzu kann gemäß einer Ausführungsform die Extrusionsvorrichtung kontinuierlich betrieben werden und ein Düsenvordruck durch Vorgeben einer Position des Stellelements der Düse eingestellt werden. Mit anderen Worten kann während eines kontinuierlichen Extrusionsvorgangs die Düse mit ihrem Stellelement derart betrieben werden, dass ein Extrudatfluss kontinuierlich, das heißt ohne Unterbrechungen, stattfindet. Das Stellelement der Düse kann hierzu in eine Position gebracht werden, in der es einen Durchfluss durch die Düse zumindest nicht vollständig unterbindet. Die Position des Stellelements in der Düse beeinflusst hierbei einen Durchflusswiderstand durch die Düse und somit den von der Düse eingestellten Düsenvordruck. Gegebenenfalls kann die Position des Stellelements zeitlich variiert werden, um einen Durchfluss zu variieren und/oder um einen Rückstau innerhalb des Mehrwellenextruders zu variieren. Dabei kann insgesamt die Düse derart betrieben werden, dass sich in dem Mehrwellenextruder ein Druck bzw. Rückstau einstellt, der eine vorteilhafte Produktqualität des Extrudats bewirkt.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert.
Fig. 1 zeigt eine Extrusionsvorrichtung gemäß einer Ausführungsform der vorliegenden Erfindung.
Fig. 2 zeigt eine Schnittansicht entlang der Linie A-A in Fig. 1.
Fig. 3 zeigt einen Querschnitt durch eine Düse für eine Extrusionsvorrichtung gemäß einer Ausführungsform der vorliegenden Erfindung in verschiedenen Stellungen.
Fig. 4 (a), (b) zeigt eine Längsschnittansicht durch eine Düse für eine Extrusionsvorrichtung gemäß einer Ausführungsform der vorliegenden Erfindung sowie einen Querschnitt entlang der Linie B-B.
Fig. 5 (a), (b) zeigt eine Längsschnittansicht durch eine Düse für eine Extrusionsvorrichtung gemäß einer alternativen Ausführungsform der vorliegenden Erfindung sowie eine Seitenansicht auf deren Stellelement.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

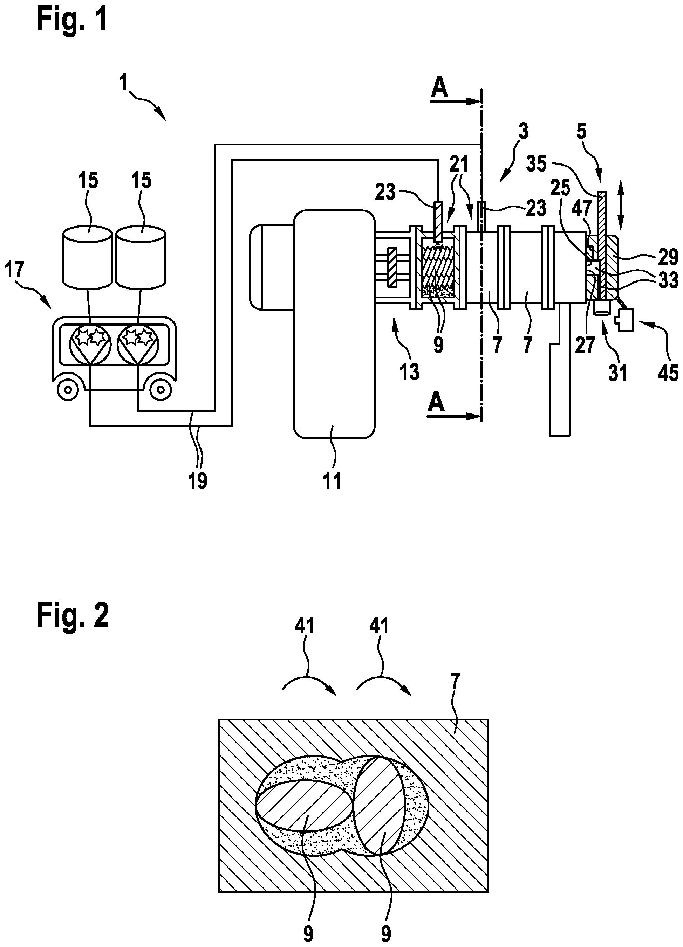

Fig. 1 zeigt eine Extrusionsvorrichtung 1 zum Mischen und Ausgeben hochviskoser, reaktiver Mehrphasengemische gemäß einer Ausführungsform der vorliegenden Erfindung.

Die Extrusionsvorrichtung 1 umfasst unter anderem einen Mehrwellenextruder 3 sowie eine regelbare und vorzugsweise selbstreinigungsfähige Düse 5.

Der Mehrwellenextruder 3 ist als Doppelschneckenextruder ausgebildet. In einem modular aufgebauten Gehäuse 7 sind dabei zwei Schneckenwellen 9 rotierbar und dichtkämmend ineinandergreifend aufgenommen. Ein Antrieb 11 treibt die beiden Schneckenwellen 9 über ein Getriebe 13 rotierend an.

Zwei Ausgangsstoffe wie zum Beispiel Polyol und Isocyanat sind in getrennten Arbeitsbehältern 15 gelagert und werden einer Dosiereinrichtung 17 zugeführt. Die Dosiereinrichtung 17 liefert die Ausgangsstoffe über Leitungen 19 an Dosierlanzen 23. Die Dosierlanzen 23 führen die Ausgangsstoffe dem Mehrwellenextruder 3 an jeweiligen Einlässen 21 in dessen Gehäuse 7 zu. Die Ausgangsstoffe werden dann von den beiden Schneckenwellen 9 vermischt und dabei entlang einer Förderrichtung (im dargestellten Beispiel horizontal von links nach rechts) hin zu einem Auslass 25 des Gehäuses 7 gefördert.

In Fig. 2 ist ein Querschnitt entlang der Linie A-A aus Fig. 1 dargestellt. Darin ist gut zu erkennen, wie die beiden Schneckenwellen 9 dichtkämmend ineinandergreifend in dem Gehäuse 7 angeordnet sind. Im dargestellten Beispiel ist der Doppelschneckenextruder als Gleichdralldoppelschneckenextruder ausgebildet, sodass die beiden Schneckenwellen 9 in einer gleichen Drehrichtung 41 gedreht werden.

Im Bereich des Auslasses 25 ist an den Mehrwellenextruder 3 die Düse 5 angekoppelt. Die Düse 5 verfügt dabei über ein Gehäuse 29 mit einem Eingang 27 und einem Ausgang 31, die über einen Kanal 33 miteinander verbunden sind. Der Auslass 25 des Mehrwellenextruders 3 mündet dabei in den Eingang 27 der Düse 5.

In dem Kanal 33 ist ein Stellelement 35 angeordnet, welches in verschiedene Positionen in dem Kanal 33 verlagert werden kann und dabei einen Durchflusswiderstand bzw. einen Durchflussquerschnitt durch den Kanal 33 vergrößern oder verkleinern und somit regulieren kann. Im dargestellten Beispiel sind der Kanal 33 und das Stellelement 35 linear ausgebildet, sodass das Stellelement 35 in dem Kanal 33 durch eine translatorische Bewegung verlagert werden kann. Nahe dem Eingang 27 der Düse 5 ist ein Sensor 47 vorgesehen, mithilfe dessen ein aktueller Druck in dem Kanal 33 und/oder ein aktueller Fluss durch den Kanal 33 gemessen werden kann und dessen Sensordaten somit als Regelgröße zum Regeln des mithilfe der Düse bewirkten Durchflusswiderstandes eingesetzt werden können. Der Sensor 47 ist dabei zwischen dem Auslass 25 des Mehrwellenextruders 3 und einem Teilbereich des Kanals 33, innerhalb dessen das Stellelement 35 verlagert werden kann, d.h. stromaufwärts des letztgenannten Teilbereichs, angeordnet.

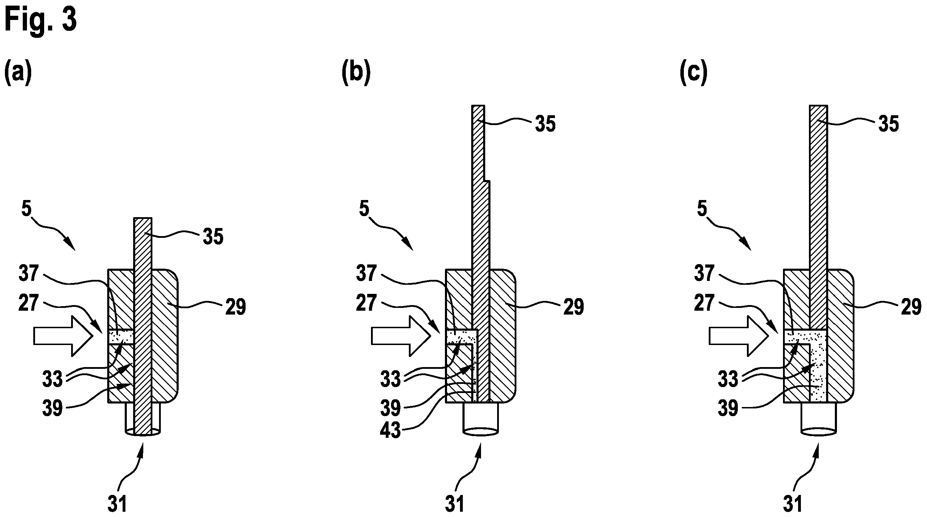

In den Fign. 3(a) - (c) ist die Düse 5 mit in verschiedenen Stellungen angeordnetem Stellelement 35 dargestellt. Im dargestellten Beispiel ist der Kanal 33 mit einem kurzen horizontalen Teilbereich 37 und einem zu diesem senkrecht verlaufenden vertikalen Teilbereich 39 ausgebildet. Der vertikale Teilbereich 39 geht dabei linear durch das gesamte Gehäuse 29 durch. Das Stellelement 35 kann in diesem linearen Teilbereich 39 des Kanals 33 in vertikaler Richtung verlagert werden.

Das Stellelement 35 weist dabei einen Querschnitt auf, der im Wesentlichen komplementär zu dem Querschnitt des vertikalen Teilbereichs 39 des Kanals 33 ist. Dabei kann der Kanal 33 zumindest in seinem vertikalen Teilbereich 39 einen konstanten Querschnitt haben. Das Stellelement 35 oder zumindest Teile desselben füllen somit den Querschnitt des vertikalen Teilbereichs 39 des Kanals 33 vollständig aus und können diesen somit je nach aktueller Stellung des Stellelements 35 verschließen.

In Fig. 3(a) ist die Düse 5 dabei in einer geschlossenen Konfiguration gezeigt, bei der das Stellelement 35 in einer Geschlossenposition angeordnet ist und einen unteren Teil des vertikalen Teilbereichs 39 des Kanals 33 unterhalb des horizontalen Teilbereichs 37 ausfüllt und somit verschließt. In dieser Konfiguration ist der Kanal 33 somit blockiert und die Düse 5 geschlossen.

Im Gegensatz hierzu ist in Fig. 3(c) eine geöffnete Konfiguration der Düse 5 dargestellt, bei der das Stellelement 35 so weit nach oben gezogen ist, dass es in einer Offenposition nicht mehr bis in den unteren Teil des vertikalen Teilbereichs 39 des Kanals 33 unterhalb des horizontalen Teilbereichs 37 ragt. Somit ist der Kanal 33 in dieser Konfiguration maximal freigegeben und die Düse 5 somit geöffnet.

In Fig. 3(b) ist eine Zwischenkonfiguration dargestellt, in der das Stellelement 35 den unteren Teil des vertikalen Teilbereichs 39 unterhalb des horizontalen Teilbereich 37 des Kanals 33 zwar teilweise, aber nicht vollständig ausfüllt und somit einen Durchflussquerschnitt durch den Kanal 33 beengt, aber nicht verschließt.

Zu diesem Zweck kann in dem Stellelement 35 beispielsweise eine Nut 43 vorgesehen sein, durch die Extrudat strömen kann. Diese Nut 43 kann konisch ausgebildet sein, sodass je nach Stellung des Stellelements 35 der verbleibende Durchflussquerschnitt in dem Kanal 33 stufenlos variiert werden kann.

Alternativ kann die Nut 43 einen über ihre Länge hin konstanten Querschnitt aufweisen. Je nach Positionierung des Stellelements 35 innerhalb des Kanals 33 muss ein längerer oder kürzerer Teilbereich der Nut 43 von dem Extrudat durchströmt werden, wodurch der Durchflusswiderstand präzise beeinflusst werden kann.

Alternativ zu der in den Figuren dargestellten linearen Ausgestaltung des Stellelements 35 und des das Stellelement 35 aufnehmenden Bereichs des Kanals 33 können beide Komponenten auch andere strukturelle Ausgestaltungen bzw. Geometrien aufweisen. Vorstellbar ist beispielsweise eine gekrümmte, z.B. kreisförmige, Ausbildung des Kanals 33 und des Stellelements 35. In diesem Fall könnte das Stellelement 35 durch eine Drehbewegung innerhalb des Kanals 33 verlagert werden.

Die Düse 5 ist vorzugsweise selbstreinigungsfähig ausgestaltet. Beispielsweise können das Stellelement 35 und der Kanal 33 hinsichtlich ihrer Geometrien derart aneinander angepasst sein, dass beim Verlagern des Stellelements 35 etwaige Ablagerungen oder Verschmutzungen aus dem Kanal 33 ausgetragen werden. Die Düse 5 kann ferner mit einem Reinigungselement 45 (siehe Fig. 1) wie beispielsweise einer Druckluftdüse ausgestattet sein, mithilfe dessen an dem Stellelement 35 verbleibende Verschmutzungen entfernt werden können. Somit können insgesamt sowohl der Kanal 33 als auch das Stellelement 35 und damit die gesamte Düse 5 während des Betriebs der Extrusionsvorrichtung, d.h. ohne Teile demontieren zu müssen, sich selbst reinigen.

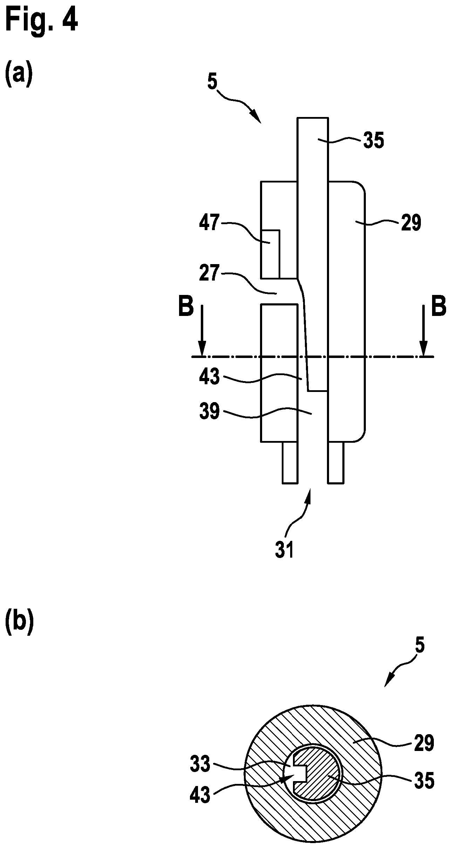

In Fig. 4(a) und (b) ist eine mögliche Ausgestaltung einer Düse 5 im Längsschnitt und im Querschnitt entlang der eingezeichneten Linie B-B dargestellt. Bei dieser Ausgestaltung ist in dem Stellelement 35 eine sich geradlinig vertikal erstreckende Nut 43 ausgebildet, deren Querschnitt sich nach unten hin vergrößert, d.h., anders ausgedrückt, deren Querschnitt sich nach oben hin verjüngt. Je nach Stellung des Stellelements 35 in dem unteren Teilbereich 39 des Kanals 33 kann somit ein Durchflussquerschnitt und hierüber ein Durchflusswiderstand stufenlos eingestellt werden.

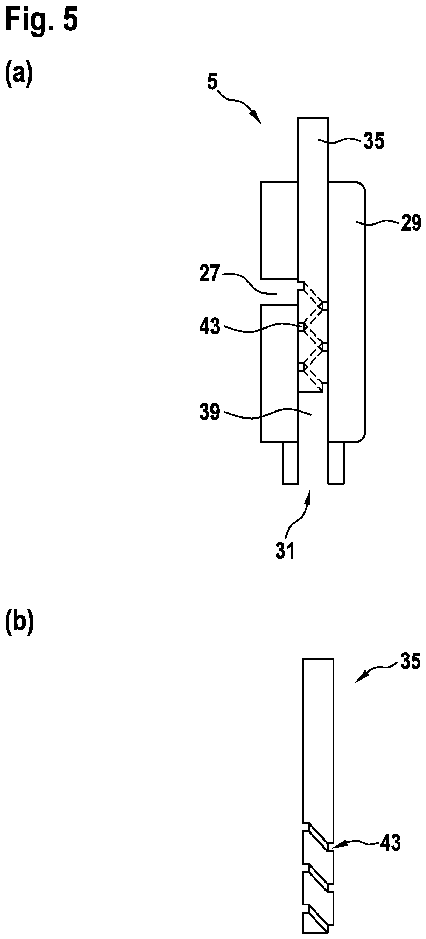

In Fig. 5(a) ist eine weitere mögliche Ausgestaltung einer Düse 5 im Längsschnitt dargestellt. Fig. 5(b) zeigt eine Seitenansicht des darin eingesetzten Stellelements 35. Das Stellelement 35 weist eine Nut 43 auf, die sich Wendel-artig entlang der Mantelfläche des Stellelements 35 erstreckt. Ein Querschnitt dieser Nut kann konstant sein. Alternativ kann sich der Querschnitt auch entlang der Nut verändern. Je nachdem, wie weit das Stellelement 35 in den linearen Teilbereich 39 des Kanals 33 eingeschoben ist, muss durchströmendes Extrudat einen längeren oder kürzeren Weg entlang dieser Nut 43 nehmen, um bis zum Ausgang 31 der Düse 5 zu gelangen. Dementsprechend stellt sich ein variabler Durchflusswiderstand ein. Eine derartige Ausgestaltung der Düse 5 kann besonders selbstreinigungsfähig sein.

Mit der hierin vorgestellten Extrusionsvorrichtung und dem damit ausführbaren Verfahren können Mischaufgaben bei einer reaktiven Verarbeitung von Kunststoffen mit höchsten Anforderungen an einen Mischprozess erfüllt werden. Eine Vermischung kann hierbei betriebspunktunabhängig und/oder sowohl kontinuierlich als auch diskontinuierlich möglich sein. Dabei ist speziell zu berücksichtigen, dass ein realisierbarer Druckaufbau in einem Mehrwellenextruder wie einem Doppelschneckenextruder im Allgemeinen direkt von einer axialen Länge des vollgefüllten Streckenabschnitts abhängt. Dies kann insbesondere für eine diskontinuierliche Betriebsweise kritisch sein. Die Ausgangskomponenten bzw. -stoffe können sehr große Viskositätsunterschiede aufweisen und können in beliebigen Verhältnissen vermischt werden.

Dabei kann es möglich sein, abrasive Zusatzstoffpartikel möglicherweise in hohen Konzentrationen in die Werkstoffe einzubringen. Vorteilhafterweise ist hierbei die vorgestellte Extrusionsvorrichtung vollständig selbstreinigend, um einen Einsatz beispielsweise von Lösemitteln zum Reinigen der Extrusionsvorrichtung überflüssig zu machen. Mit dem hierin vorgestellten Ansatz können beispielsweise Produkte aus Polyurethan hergestellt werden.

Wie üblich beim Vermischen von Ausgangskomponenten mittels Niederdruck werden die Aufgaben des Dosierens und der mechanischen Vermischung von getrennten Einheiten realisiert. Im Gegensatz zu herkömmlichen Mischergeometrien ist bei der hierin vorgestellten Extrusionsvorrichtung neben der vermischenden Eigenschaft auch eine förderaktive Eigenschaft implementiert, sodass diese sich bei Unterbrechung der Dosierung und ausreichend hohen Drehzahlen selbst reinigt.

In Kombination mit der regelbaren Düse 5 kann die Förderaktivität darüber hinaus genutzt werden, um einen Druckaufbau zu erzeugen, der die Produktqualität im stationären Betrieb positiv beeinflusst. Insbesondere kann eine Verringerung einer Gasbeladung und/oder eine bessere axiale Vermischung erreicht werden. Eine zeitabhängige Regelung eines Druckabfalls in der Düse 5 kann dabei außerdem nötig sein, um einem vom Füllgrad abhängigen Druckaufbauvermögen des Doppelschneckenextruders im diskontinuierlichen Betrieb Rechnung tragen zu können.

Die Kombination einer förderaktiven Mischergeometrie mit einer regelbaren und selbstreinigenden Düse 5 kann somit als wesentlich für Ausführungsformen der hierin vorgestellten Erfindung angesehen werden.

Konstruktiv hat die regelbare Düse 5 insbesondere zwei Hauptaufgabenstellungen zu erfüllen. Erstens soll die Düse 5 ihren Druckverbrauch bei unterschiedlichen Durchsätzen selbstständig regeln können. Zweitens sollte der Verschlussmechanismus der Düse 5 selbstreinigend ausgeführt sein. Die Düse 5 kann dieses Aufgabenprofil erfüllen, indem eine Fließkanalgeometrie mit einem oder mehreren verschiebbaren Stellelementen 35 ausgeführt ist. Je nach eingestellter Position des als Schieber wirkenden Stellelements 35 kann die Düse vollständig verschlossen, in beliebiger mittlerer Stellung oder vollständig geöffnet sein. Eine Variation zwischen den unterschiedlichen Positionen der Düse 5 kann dabei möglichst stufenlos möglich sein.

Zusammenfassend kann ein wesentlicher Aspekt der hierin vorgestellten Erfindung in dem Einsatz eines selbstreinigenden, dynamischen Druckverbrauchers gesehen werden, mit dem, in Kombination mit einem förderaktiven Mischaggregat, eine qualitativ hochwertige Vermischung im kontinuierlichen und diskontinuierlichen Betrieb möglich wird. In den vorgestellten Ausführungsformen wird dies durch die Kombination eines Mehrwellenextruders 3, insbesondere eines Doppelschneckenextruders, mit einer regelbaren Düse 5 realisiert.

Gegenüber konventionellen Nieder- und Hochdruck-Mischtechniken beispielsweise bei der Polyurethan-Verarbeitung kann das hierin vorgestellte Konzept jeweils Vorteile der unterschiedlichen Mischtechniken kombinieren, weitestgehend ohne die spezifischen Nachteile in Kauf nehmen zu müssen. Erreichbare Vorteile im Vergleich zu konventionellen Ansätzen sind hierbei, dass die vorgestellte Extrusionsvorrichtung selbstreinigend sein kann, ein beliebiges Dosierverhältnis wählbar sein kann, hohe Viskositätsdifferenzen verarbeitbar sein können, hohe Füllstoffgehalte möglich sein können, Lösungsmittel-frei gearbeitet werden kann, kein Vormischen nötig sein kann, hohe Ausgangsviskositäten verarbeitbar sein können und/oder eine intensive dispersive Mischwirkung erzielbar sein kann.

Mit dem hier vorgestellten Ansatz kann somit eine Niederdruck-Mischtechnik für hochviskose reaktive Stoffe wie zum Beispiel Polyurethan bzw. dessen Ausgangskomponenten, die eine Viskosität im Bereich von 10 bis 200 Pa·s haben können, eingesetzt werden. Dabei kann es möglich sein, eine Baugröße der einzusetzenden Extrusionsvorrichtung zu reduzieren und hierdurch deren Handhabung zu vereinfachen. Es können kürzere Schnecken mit einer hohen Drehzahl von beispielsweise 5 000 bis 20 000 U/min realisiert werden. Die regelbare selbstreinigende Düse kann als selbstreinigender Schieber aufgebaut sein. Durch die Möglichkeit der Regelung des Druckes in dem Mehrwellenextruder mithilfe der Düse kann eine Verbesserung der Mischqualität und/oder eine Vergleichmäßigung eines Austragsvolumens, d.h. verringerte Einschlüsse und bessere Homogenität, erreicht werden. Im Vergleich zu Niederdruckverfahren ohne eine geregelte Düse können deutliche Vorteile in der Produktqualität, insbesondere eine Verringerung einer Blasenbildung, erreicht werden. Ein optimaler Betriebspunkt kann durch die regelbare Düse einstellbar sein. Bei einer Chargen-Anwendung kann dadurch durchschnittlich über eine Charge hinweg eine bessere Produktqualität bzw. Homogenität erhalten werden, weil die regelbare Düse sich an ein verringertes Volumen und dadurch veränderte Verhältnisse in dem Mischer anpassen kann.

### Bezugszeichenliste

- 1: Extrusionsvorrichtung
- 3: Mehrwellenextruder
- 5: Düse
- 7: Gehäuse
- 9: Schneckenwelle
- 11: Antrieb
- 13: Getriebe
- 15: Arbeitsbehälter
- 17: Dosiervorrichtung
- 19: Leitungen
- 21: Einlass
- 23: Dosierlanze
- 25: Auslass
- 27: Eingang
- 29: Gehäuse
- 31: Ausgang
- 33: Kanal
- 35: Stellelement
- 37: horizontaler Teilbereich des Kanals
- 39: vertikaler Teilbereich des Kanals
- 41: Drehrichtung
- 43: Nut
- 45: Reinigungselement
- 47: Sensor

## Patentansprüche

1. Extrusionsvorrichtung (1) zum Mischen und Ausgeben hochviskoser, reaktiver Mehrphasengemische, wobei die Extrusionsvorrichtung (1) aufweist:
einen Mehrwellenextruder (3) und
eine regelbare Düse (5);
wobei der Mehrwellenextruder (3) aufweist:
- ein Gehäuse (7),
- wenigstens einen Einlass (21) in dem Gehäuse (7), durch den zu extrudierendes Material zugeführt werden kann,
- einen Auslass (25) in dem Gehäuse (7), durch den extrudiertes Material ausgelassen werden kann,
- wenigstens zwei Schneckenwellen (9), die beide in dem Gehäuse (7) rotierbar und dichtkämmend ineinandergreifend aufgenommen sind,
- einen Antrieb (11) zum rotierenden Antreiben der Schneckenwellen (9);
wobei die Düse (5) aufweist:
- ein Gehäuse (29),
- wenigstens einen Eingang (27) in dem Gehäuse (29), welcher an den Auslass (25) des Mehrwellenextruders (3) in Fluidverbindung angeschlossen ist und durch den extrudiertes Material zugeführt werden kann,
- einen Ausgang (31) in dem Gehäuse (29), durch den extrudiertes Material ausgelassen werden kann,
- einen Kanal (33) zwischen dem Eingang (27) und dem Ausgang (31),
- wenigstens ein Stellelement (35), welches durch Verlagern des Stellelements (35) in verschiedene Positionen in dem Kanal (33) einen Durchflusswiderstand zwischen dem Eingang (27) und dem Ausgang (31) reguliert,
**dadurch gekennzeichnet, dass** das Stellelement (35) und der Kanal (33) derart strukturell aneinander angepasst sind und das Stellelement (35) derart relativ zu dem Kanal (33) verlagerbar ist, dass das Stellelement (35) zwischen einer Geschlossenposition, in der das Stellelement (35) den Kanal (33) vollständig schließt, und einer Offenposition, in der das Stellelement (35) den Kanal (33) maximal freigibt, verlagerbar ist, und dass die Düse (5) dazu konfiguriert ist, den Kanal (33) zumindest in einem Teilbereich (39) zwischen dem Eingang (27) und dem Ausgang (31) während des Betriebs der Extrusionsvorrichtung (1) mithilfe des Stellelements (35) selbsttätig zu reinigen, wobei der Kanal (33) und das Stellelement (35) zumindest bereichsweise einen im Wesentlichen komplementären Querschnitt derart aufweisen, dass ein Außenumfang des Stellelements derart in mechanischem Kontakt mit einer den Kanal umgebenden Innenwandung steht, dass das Stellelement, wenn es entlang des Kanals verlagert wird, aufgrund dieses mechanischen Kontakts etwaige Ablagerungen an der Innenwandung mitnimmt bzw. aus dem Ausgang der Düse herauspresst.

2. Extrusionsvorrichtung nach Anspruch 1, wobei zumindest ein das Stellelement aufnehmender Teilbereich (39) des Kanals (33) einen konstanten Querschnitt aufweist und wobei zumindest ein Teilbereich des Stellelements (35) einen konstanten Querschnitt aufweist und wobei der Teilbereich(39) des Kanals (33) und der Teilbereich des Stellelements (35) im Wesentlichen gleiche Querschnitte aufweisen.

3. Extrusionsvorrichtung nach einem der vorangehenden Ansprüche, wobei die Extrusionsvorrichtung in einem Bereich, welcher sich von dem Auslass (25) in dem Gehäuse (7) des Mehrwellenextruders (3) bis zum Ausgang (31) in dem Gehäuse (29) der Düse (5) reicht, einen Sensor (47) aufweist, welcher dazu konfiguriert ist, einen Parameter, welcher den Durchflusswiderstand, der sich zwischen dem Eingang (27) und dem Ausgang (31) der Düse (5) einstellt, charakterisiert, zu messen.

4. Extrusionsvorrichtung nach Anspruch 3, wobei der Sensor (47) in einem Teilbereich angeordnet ist, der stromaufwärts eines Teilbereichs des Kanals (33), in den das Stellelement (35) zu verlagern ist, angeordnet ist.

5. Extrusionsvorrichtung nach einem der vorangehenden Ansprüche, wobei an der Düse (5) ergänzend ein separates Reinigungselement (45) vorgesehen ist, welches dazu konfiguriert ist, an dem Stellelement (35) anhaftende Verschmutzungen zu entfernen.

6. Extrusionsvorrichtung nach einem der vorangehenden Ansprüche, wobei das Stellelement (35) und der Kanal (33) derart strukturell aneinander angepasst sind und das Stellelement (35) derart relativ zu dem Kanal (33) verlagerbar ist, dass durch Verlagern des Stellelements (35) der Durchflusswiderstand stufenlos variierbar ist.

7. Extrusionsvorrichtung nach einem der vorangehenden Ansprüche, wobei der Mehrwellenextruder (3) ein Doppelschneckenextruder ist, insbesondere wobei der Mehrwellenextruder (3) ein Gleichdralldoppelschneckenextruder ist.

8. Extrusionsvorrichtung nach einem der vorangehenden Ansprüche, wobei der Mehrwellenextruder (3) dazu konfiguriert ist, die Schneckenwellen (9) mit Drehzahlen von mehr als 2000 Umdrehungen pro Minute zu rotieren.

9. Verfahren zum Mischen und Ausgeben hochviskoser, reaktiver Mehrphasengemische, wobei zumindest ein erster hochviskoser Stoff mit einem zweiten Stoff unter Verwendung einer Extrusionsvorrichtung (1) gemäß einem der Ansprüche 1 bis 8 gemischt wird.

10. Verfahren nach Anspruch 9, wobei der erste Stoff eine Viskosität von mehr als 1 Pa·s aufweist.

11. Verfahren nach einem der Ansprüche 9 und 10, wobei der erste Stoff ein Polyol ist und/oder wobei der zweite Stoff ein Isocyanat ist.

12. Verfahren nach einem der Ansprüche 9 bis 11, wobei zusätzlich zu dem ersten und dem zweiten Stoff Festkörperpartikel mit der Extrusionsvorrichtung eingemischt werden.

13. Verfahren nach einem der Ansprüche 9 bis 12, wobei die Extrusionsvorrichtung (1) durch wiederholtes Öffnen und Schließen der Düse (5) diskontinuierlich betrieben wird.

14. Verfahren nach einem der Ansprüche 9 bis 13, wobei die Extrusionsvorrichtung (1) kontinuierlich betrieben wird und ein Düsenvordruck durch Vorgeben einer Position des Stellelements (35) der Düse (5) eingestellt wird.

## Claims

1. Extrusion device (1) for mixing and dispensing highly viscous, reactive multiphase mixtures, wherein the extrusion device (1) comprises:
a multi-shaft extruder (3); and
a controllable die (5);
wherein the multi-shaft extruder (3) comprises:
- a housing (7),
- at least one inlet (21) in said housing (7), through which material to be extruded can be fed,
- an outlet (25) in the housing (7), through which extruded material can be discharged,
- at least two screw shafts (9) which are both accommodated in the housing (7) so as to be rotatable and interlocking in a tightly meshing manner,
- a drive (11) for rotatably driving the screw shafts (9) ;
wherein the die (5) comprises:
- a housing (29),
- at least one infeed (27) in the housing (29) which is connected to the outlet (25) of the multi-shaft extruder (3) in fluid communication and through which extruded material can be fed,
- a discharge point (31) in the housing (29), through which extruded material can be discharged,
- a channel (33) between the infeed (27) and the discharge point (31),
- at least one actuating element (35) which, by displacement of the actuating element (35) to different positions in the channel (33), regulates a flow resistance between the infeed (27) and the discharge point (31),
**characterised in that**
the actuating element (35) and the channel (33) are structurally adapted to one another and the actuating element (35) is displaceable relative to the channel (33) such that the actuating element (35) is displaceable between a closed position, in which the actuating element (35) completely closes the channel (33), and an open position, in which the actuating element (35) opens the channel (33) to a maximum extent,
and **in that**
the die (5) is configured to clean in a self-acting manner the channel (33) at least in a partial region (39) between the infeed (27) and the discharge point (31) during the operation of the extrusion device (1) with the aid of the actuating element (35), wherein the channel (33) and the actuating element (35) have, at least in regions, a substantially complementary cross-section such that an outer circumference of the actuating element is in mechanical contact with an inner wall surrounding the channel such that, by reason of this mechanical contact, the actuating element, when being displaced along the channel, entrains any deposits on the inner wall or presses said deposits out of the discharge point of the die.

2. Extrusion device as claimed in claim 1, wherein at least a partial region (39) of the channel (33) which accommodates the actuating element has a constant cross-section and wherein at least a partial region of the actuating element (35) has a constant cross-section and wherein the partial region (39) of the channel (33) and the partial region of the actuating element (35) have substantially identical cross-sections.

3. Extrusion device as claimed in any one of the preceding claims, wherein the extrusion device comprises, in a region extending from the outlet (25) in the housing (7) of the multi-shaft extruder (3) to the discharge point (31) in the housing (29) of the die (5), a sensor (47) which is configured to measure a parameter which characterises the flow resistance occurring between the infeed (27) and the discharge point (31) of the die (5).

4. Extrusion device as claimed in claim 3, wherein the sensor (47) is arranged in a partial region which is arranged upstream of a partial region of the channel (33), into which the actuating element (35) is to be displaced.

5. Extrusion device as claimed in any one of the preceding claims, wherein a separate cleaning element (45) is additionally provided on the die (5) and is configured to remove contaminants adhering to the actuating element (35).

6. Extrusion device as claimed in any one of the preceding claims, wherein the actuating element (35) and the channel (33) are structurally adapted to one another and the actuating element (35) is displaceable relative to the channel (33) such that the flow resistance is continuously variable by displacement of the actuating element (35).

7. Extrusion device as claimed in any one of the preceding claims, wherein the multi-shaft extruder (3) is a twin-screw extruder, in particular wherein the multi-shaft extruder (3) is a co-rotating twin-screw extruder.

8. Extrusion device as claimed in any one of the preceding claims, wherein the multi-shaft extruder (3) is configured to rotate the screw shafts (9) at rotational speeds of more than 2000 revolutions per minute.

9. Method for mixing and dispensing highly viscous, reactive multiphase mixtures, wherein at least a first highly viscous substance is mixed with a second substance using an extrusion device (1) as claimed in any one of claims 1 to 8.

10. Method as claimed in claim 9, wherein the first substance has a viscosity of more than 1 Pa·s.

11. Method as claimed in any one of claims 9 and 10, wherein the first substance is a polyol and/or wherein the second substance is an isocyanate.

12. Method as claimed in any one of claims 9 to 11, wherein, in addition to the first substance and the second substance, solid particles are mixed in with the extrusion device.

13. Method as claimed in any one of claims 9 to 12, wherein the extrusion device (1) is operated discontinuously by repeated opening and closing of the die (5).

14. Method as claimed in any one of claims 9 to 13, wherein the extrusion device (1) is operated continuously and a die system pressure is set by specifying a position of the actuating element (35) of the die (5).

## Revendications

1. Dispositif d'extrusion (1) pour mélanger et distribuer des mélanges multiphases réactifs à haute viscosité, le dispositif d'extrusion (1) présentant :
une extrudeuse à plusieurs arbres (3) et
une filière réglable (5) ;
l'extrudeuse à plusieurs arbres (3) présentant :
- un carter (7),
- au moins une admission (21) dans le carter (7), à travers laquelle le matériau à extruder peut être amené,
- une décharge (25) dans le carter (7), par laquelle le matériau extrudé peut être évacué,
- au moins deux arbres à vis sans fin (9), qui sont tous deux reçus dans le carter (7) de manière à pouvoir tourner et à s'engrener l'un dans l'autre de manière étanche,
- un entraînement (11) pour entraîner en rotation les arbres à vis sans fin (9) ;
la filière (5) présentant :
- un carter (29),
- au moins une entrée (27) dans le carter (29), qui est raccordée en liaison fluidique à la décharge (25) de l'extrudeuse à plusieurs arbres (3) et à travers laquelle le matériau extrudé peut être amené,
- une sortie (31) dans le carter (29), par laquelle le matériau extrudé peut être évacué,
- un conduit (33) entre l'entrée (27) et la sortie (31),
- au moins un élément de réglage (35) qui, par déplacement de l'élément de réglage (35) dans différentes positions dans le conduit (33), régule une résistance à l'écoulement entre l'entrée (27) et la sortie (31),
**caractérisé en ce que**
l'élément de réglage (35) et le conduit (33) sont adaptés structurellement l'un à l'autre et l'élément de réglage (35) peut être déplacé par rapport au conduit (33) de telle sorte que l'élément de réglage (35) peut être déplacé entre une position fermée, dans laquelle l'élément de réglage (35) ferme complètement le conduit (33), et une position ouverte, dans laquelle l'élément de réglage (35) libère au maximum le conduit (33),
et **en ce que** la filière (5) est configurée pour nettoyer automatiquement le conduit (33) au moins dans une zone partielle (39) entre l'entrée (27) et la sortie (31) pendant le fonctionnement du dispositif d'extrusion (1) à l'aide de l'élément de réglage (35), le conduit (33) et l'élément de réglage (35) présentant au moins par zones une section transversale sensiblement complémentaire, de telle sorte qu'un pourtour extérieur de l'élément de réglage est en contact mécanique avec une paroi intérieure entourant le conduit de sorte que l'élément de réglage, lorsqu'il est déplacé le long du conduit, chasse, en raison de ce contact mécanique, d'éventuels dépôts sur la paroi intérieure et les expulse par la sortie de la filière.

2. Dispositif d'extrusion selon la revendication 1, dans lequel au moins une zone partielle (39) du conduit (33) recevant l'élément de réglage présente une section transversale constante et dans lequel au moins une zone partielle de l'élément de réglage (35) présente une section transversale constante et dans lequel la zone partielle (39) du conduit (33) et la zone partielle de l'élément de réglage (35) présentent des sections transversales sensiblement identiques.

3. Dispositif d'extrusion selon l'une des revendications précédentes, dans lequel le dispositif d'extrusion présente, dans une zone s'étendant de la décharge (25) dans le carter (7) de l'extrudeuse à plusieurs arbres (3) à la sortie (31) dans le carter (29) de la filière (5), un capteur (47) qui est configuré pour mesurer un paramètre qui caractérise la résistance à l'écoulement qui s'établit entre l'entrée (27) et la sortie (31) de la filière (5).

4. Dispositif d'extrusion selon la revendication 3, dans lequel le capteur (47) est disposé dans une zone partielle située en amont d'une zone partielle du conduit (33) dans laquelle l'élément de réglage (35) doit être déplacé.

5. Dispositif d'extrusion selon l'une des revendications précédentes, dans lequel il est prévu en complément sur la filière (5) un élément de nettoyage (45) séparé qui est configuré pour éliminer les salissures adhérant à l'élément de réglage (35).

6. Dispositif d'extrusion selon l'une des revendications précédentes, dans lequel l'élément de réglage (35) et le conduit (33) sont adaptés structurellement l'un à l'autre et l'élément de réglage (35) peut être déplacé par rapport au conduit (33) de telle sorte qu'il est possible de faire varier en continu la résistance à l'écoulement par déplacement de l'élément de réglage (35).

7. Dispositif d'extrusion selon l'une des revendications précédentes, dans lequel l'extrudeuse à plusieurs arbres (3) est une extrudeuse à double vis, en particulier dans lequel l'extrudeuse à plusieurs arbres (3) est une extrudeuse à double vis corotatives.

8. Dispositif d'extrusion selon l'une des revendications précédentes, dans lequel l'extrudeuse à plusieurs arbres (3) est configurée pour faire tourner les arbres à vis sans fin (9) à des vitesses de rotation supérieures à 2 000 tours par minute.

9. Procédé pour mélanger et distribuer des mélanges multiphases réactifs à haute viscosité, dans lequel au moins une première substance à haute viscosité est mélangée avec une deuxième substance en utilisant un dispositif d'extrusion (1) selon l'une des revendications 1 à 8.

10. Procédé selon la revendication 9, dans lequel la première substance présente une viscosité supérieure à 1 Pa·s.

11. Procédé selon l'une des revendications 9 et 10, dans lequel la première substance est un polyol et/ou la deuxième substance est un isocyanate.

12. Procédé selon l'une des revendications 9 à 11, dans lequel, en plus de la première et de la deuxième substance, des particules solides sont mélangées avec le dispositif d'extrusion.

13. Procédé selon l'une des revendications 9 à 12, dans lequel le dispositif d'extrusion (1) fonctionne de manière discontinue par ouverture et fermeture répétées de la filière (5).

14. Procédé selon l'une des revendications 9 à 13, dans lequel le dispositif d'extrusion (1) fonctionne en continu et une pression initiale de la filière est réglée en prédéfinissant une position de l'élément de réglage (35) de la filière (5).
